(19) Europäisches Patentamt
European Patent Office
Office européen des brevets

(11) Publication number: 0 224 348
A2

(12) # EUROPEAN PATENT APPLICATION

(21) Application number: 86308626.0

(22) Date of filing: 05.11.86

(51) Int.Cl.[4]: B 01 D 53/14

(30) Priority: 18.11.85 GB 8528381

(43) Date of publication of application: 03.06.87 Bulletin 87/23

(84) Designated Contracting States: DE FR GB IT NL

(71) Applicant: IMPERIAL CHEMICAL INDUSTRIES PLC
Imperial Chemical House Millbank
London SW1P 3JF(GB)

(72) Inventor: Conti-Ramsden, John Norris
Fingerpost Cottage Fingerpost Lane
Norley Warrington Cheshire WA6 8LE(GB)

(72) Inventor: Corr, Stuart
59 Victoria Road
Runcorn Cheshire(GB)

(72) Inventor: Prendergast, Maurice Joseph
9 Kendal Rise
Runcorn Cheshire(GB)

(74) Representative: Stephenson, Kenneth et al,
Imperial Chemical Industries PLC Legal Department: Patents PO Box 6 Bessemer Road
Welwyn Garden City Herts, AL7 1HD(GB)

(54) **Process for the removal of acid gases from a gas mixture.**

(57) A process for the removal of acid gases from a gaseous mixture which comprises contacting said mixture with an aqueous solution containing an alkanolamine, a primary or secondary amine promoter and an alkali metal or quaternary ammonium salt which is not a catalyst for the hydration of carbon dioxide.

EP 0 224 348 A2

Croydon Printing Company Ltd.

TITLE MODIFIED
see front page



QM 33683/EP

## CHEMICAL PROCESS

This invention relates to a chemical process and more particularly to an improved process for removing acid gases from gaseous mixtures containing such gases.

It is well known to treat gaseous mixtures containing acidic gases such as carbon dioxide and hydrogen sulphide with an alkaline solution capable of absorbing the said gases. In particular, it is known to treat such gaseous mixtures with solutions of amines and especially with aqueous solutions of alkanolamines such as methyldiethanolamine.

The efficiency of processes employing these absorbing solutions is largely dependent upon the rate of transfer of molecules of the acid gas from the gas phase to the liquid phase and various proposals have been made with the object of increasing this rate. In particular, it has been proposed to include in the solutions minor proportions, relative to the alkanolamine, of additives known as promoters which have the desired effect. Thus, in United Kingdom Patent Specification No. 1560905 it has been shown that the absorption rate of carbon dioxide by aqueous solutions of alkanolamines can be increased substantially by the presence of piperazine.

It has now been found that a further significant increase in the rate of absorption can be effected by including certain alkali metal or quaternary ammonium salts in the solutions.

Accordingly, the invention provides a process for the removal of acid gases from a gaseous mixture which comprises contacting said mixture with an aqueous

solution containing an alkanolamine, a primary or secondary amine promoter and an alkali metal or quaternary ammonium salt which is not a catalyst for the hydration of carbon dioxide.

Alkanolamines which may be used in the process of the invention include compounds of the formula:

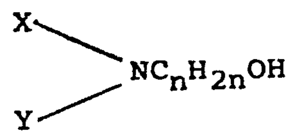

wherein n is 2 or 3 and X and Y each independently represents hydrogen, $C_{1-4}$ alkyl or $C_nH_{2n}OH$.

Examples of suitable alkanolamines include ethanolamine, diethanolamine, di-isopropanolamine and especially tertiary alkanolamines such as N-methyldiethanolamine, N-ethyldiethanolamine, N,N-dimethylethanolamine, N,N-diethylethanolamine, N-methyldi-isopropanolamine and triethanolamine.

The concentration of alkanolamine in the solution is suitably within the range 1 to 5 molar.

Amine promoters which may be used in the process of the invention include piperazine and derivatives thereof. The concentration of promoter is suitably within the range 0.2 to 1 molar.

The alkali metal or quaternary ammonium salt may be, for example, an alkali metal or quaternary ammonium nitrate, chloride, acetate, sulphate, bisulphate, carbonate or bicarbonate, potassium salts having given useful results. The salt concentration is suitably within the range 0.01 to 0.5 molar. Salts which are catalysts for the hydration of carbon dioxide, for example vanadates and arsenates, are not used as the sole salts in the process of the invention.

In the operation of the process of the invention, the gaseous mixture from which acid gases are to be removed, which may for example be a synthesis gas or ammonia synthesis feed, may be brought into intimate contact with the absorbing solution using conventional means such as a tower packed with, for example, ceramic rings or saddles or with bubble cap plates or sieve plates or a bubble reactor.

In the absorption step, the gaseous mixture may be fed into the base of the tower whilst the aqueous solution is fed into the top. The gaseous mixture substantially freed from acid gases emerges from the top of the tower whilst the aqueous solution containing absorbed acid gases is removed from the base.

Preferably, the temperature of the aqueous solution during the absorption step is between 20° and 90°C, particularly between 30°C and 60°C. The pressure of the gaseous mixture may be atmospheric but is preferably greater than atmospheric since this enables the size of the equipment employed to be reduced and also leads to a reduction in the concentration of acid gases in the gas emerging from the top of the tower.

The aqueous solution charged with absorbed gases may be regenerated by conventional means such as pressure reduction which causes the acid gases to flash off, or by passing the solution into the top of a tower similar to that used in the absorption step and passing an inert gas such as nitrogen, steam or preferably air up the tower.

An advantageous feature of the process of the invention is that the rate of carbon dioxide absorption can be 10% higher than in similar processes using an aqueous solution of alkanolamine and promoter without added salt. This increased rate is especially marked at low carbon dioxide loadings, for example when the level of solution carbonation is below 50%.

The invention is illustrated but not limited by the following Example.

Example

In this series of experiments, the solution of interest was circulated at a constant rate and at a controlled temperature, over the sphere of a single-sphere gas absorption apparatus. The rate of gas absorption by the liquid film on the sphere was measured by determining the flow of pure $CO_2$ into the closed chamber surrounding the spheres, using a suitably calibrated mass-flow meter. The cumulate mass-flow of $CO_2$ at any time during the experiment was used to determine the extent of solution carbonation. The sphere, gas mixture and chamber were maintained at the temperature of the circulating solution throughout the experiment.

In this example, the solution (2 m in N-methyldiethanolamine, 0.3 m in piperazine and 0.1 in potassium nitrate) was circulated at a rate of 180 ml/min at 50°C over a sphere with a contact area of 85.1 $cm^2$. The gas mixture in contact with the solution comprises 2 bar $N_2$, previously saturated with the components of the circulating solution, to which was added 0.3 bar $CO_2$. The gas mixture was stirred continuously using a 4-blade impeller rotating at 100 rpm.

The results of this experiment are compared with those obtained under identical conditions using an otherwise identical solution without added $KNO_3$, in the following Table and the attached graph.

**TABLE**

| | No Salt | 0.1 M $KNO_3$ | 0.17 KOAC |
|---|---|---|---|
| 0.05 load | 306 | 320 | 332 |
| % increase | - | 4.5 | 8.5 |
| 0.10 load | 292 | 305 | 310 |
| % increase | - | 4.5 | 6.2 |

Values refer to the rate of $CO_2$ uptake in ml $min^{-1}$ for given solution loadings at the operating temperature and pressure. % increases in rate are with reference to the solution without added salt.

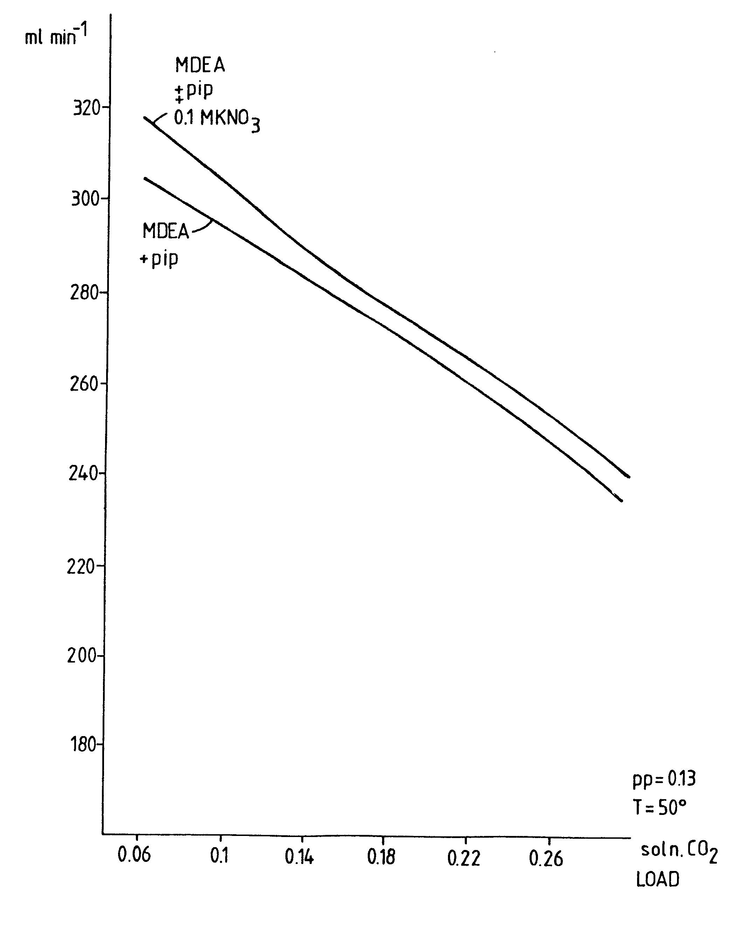

CLAIMS

1. A process for the removal of acid gases from a gaseous mixture which comprises contacting said mixture with an aqueous solution containing an alkanolamine, a primary or secondary amine promoter and an alkali metal or quaternary ammonium salt which is not a catalyst for the hydration of carbon dioxide.

2. A process according to Claim 1 wherein the alkanolamine is a tertiary alkanolamine.

3. A process according to Claim 2 wherein the tertiary alkanolamine is N-methyldiethanolamine.

4. A process according to any of Claims 1 to 3 wherein the amine promoter is piperazine.

5. A process according to any of Claims 1 to 4 wherein the alkali metal or quaternary ammonium salt is a nitrate, chloride, acetate, sulphate, bisulphate, carbonate or bicarbonate.

6. A process according to any of Claims 1 to 5 wherein the alkali metal salt is a potassium salt.

7. A process according to any of claims 1 to 6 wherein the salt concentration is within the range 0.01 to 0.5 molar.

8. A process according to any of Claims 1 to 7 wherein the temperature of the aqueous solution is between 20 and 90°C.

9. An acid gas absorbing composition comprising an aqueous solution as defined in claim 1.

0224348

Neu eingereicht / Newly filed
Nouvellement déposé